Europäisches Patentamt

European Patent Office

Office européen des brevets

(19)

(11) EP 1 544 789 A1

(12) **EUROPEAN PATENT APPLICATION**
published in accordance with Art. 158(3) EPC

(43) Date of publication:
22.06.2005 Bulletin 2005/25

(51) Int Cl.⁷: **G06T 1/00**, G06T 11/60,
H04N 1/60, G09G 5/02,
G06F 3/00

(21) Application number: 03798423.4

(22) Date of filing: 19.09.2003

(86) International application number:
PCT/JP2003/011986

(87) International publication number:
WO 2004/029876 (08.04.2004 Gazette 2004/15)

(84) Designated Contracting States:
AT BE BG CH CY CZ DE DK EE ES FI FR GB GR
HU IE IT LI LU MC NL PT RO SE SI SK TR

(30) Priority: 25.09.2002 JP 2002279643

(71) Applicant: NEC Corporation
Minato-ku, Tokyo 108-8001 (JP)

(72) Inventors:
• JYOU, Shigenobu, c/o NEC Viewtechnology, Ltd.
Tokyo 108-0014 (JP)
• TSUKADA, Masato, c/o NEC Corporation
Tokyo 108-8001 (JP)
• MOCHIZUKI, Kazuo,
c/o NEC Viewtechnology, Ltd.
Tokyo 108-0014 (JP)
• YASUMI, Takehiko,
c/o NEC Viewtechnology, Ltd.
Tokyo 108-0014 (JP)
• AOYANAGI, Hisakazu,
c/o NEC Viewtechnology, Ltd.
Tokyo 108-0014 (JP)
• NAITOU, Michitaka,
c/o NEC Viewtechnology, Ltd.
Tokyo 108-0014 (JP)

(74) Representative: Betten & Resch
Patentanwälte,
Theatinerstrasse 8
80333 München (DE)

(54) **IMAGE COLOR CORRECTING DEVICE, IMAGE COLOR CORRECTING METHOD AND IMAGE COLOR CORRECTING PROGRAM**

(57) In a method of improving quality of color images displayed on or produced from a color image device, a user is made to select a color or an object area of an object of user's interest and color correction is conducted using the selected item as a central color of correction to thereby flexibly achieve color correction.

The image color correcting device 1 conducts color correction for an input image 2 and supplying an output image to an image display section 3 and includes object selecting means 10 for selecting an object item or an object color as a color correction object from the output image of the image display section 3 and a color correction processing section 11 for calculating a central color of an object item or an object color thus selected and setting the central color as a central color of correction and correcting the central color to thereby correct the output image into a desired color.

FIG. 1

**Description**

TECHNICAL FIELD

The present invention relates to an image color correcting device, an image color correcting method, and an image color correcting program, and in particular, to an image color correcting device, an image color correcting method, and an image color correcting program in which a user is made to select a color or an object area of an object of user's interest and color correction is conducted using the selected item as a central color of correction to thereby achieve color correction of an entire image.

RELATED ART

For colors of a color image displayed on or produced from a color image device, not only when there exists a problem of colors of the image data but also when there exists a problem of color reproduction in the color image device, it is required to conduct color correction such as white balance and color fog correction. Various color correcting methods have been proposed to achieve these color corrections.

There has been proposed a method (reference is to be made to, for example, patent article 1) in which when it is difficult, in correction of a hue in a desired area of a color image, to obtain a desired hue due to a wide hue range to be corrected, an HSV value is set as (h1,s1,v1) for a pixel in consideration in input pixels according to a designated hue and a designated hue range to conduct an operation of special color index $hx = ((m - |Hue - h1|)/m) \times s1 \times v1$. Assuming that correction coefficients of respective color signals R, G, and B of the input pixels are (a1, a2, a3), the correction is conducted for the respective color signals to obtain $(R', G', B') = (R, G, B) + hx \times (a1, a2, a3)$.

Moreover, there has been proposed an automatic color correction method (reference is to be made to, for example, non-patent article 1) in which a color in an area regarded as an important object for humans such as flesh color, green of grasses and trees, and a blue sky in an image is selectively corrected into a desired (preferred) color.

[Patent article 1]

Japanese Patent Application laid open No. 10-198795 (pp. 8-9, FIG. 1)

[Non-patent article 1]

Tsukada, Funayama, Tajima: "Automatic Color Correction Method for Preferred Color Reproduction", Color Forum Japan 2000 Transactions, pp. 9-12, 2000.

PROBLEMS TO BE SOLVED BY THE INVENTION

However, the interest of the user or the object and color which the user regards as important cannot be uniquely determined. Furthermore, it can be considered that the important object and color may change depending on video sources. To solve the problem of this kind, there is required a more flexible color correcting method capable of achieving color reproduction matching the interest of the user and optimal color reproduction for each video source.

It is therefore an object of the present invention, which has been devised to solve the problem, to provide an image color correcting device, an image color correcting method, and an image color correcting program as a method of improving quality of color images displayed on or produced from a color image device in which a user is made to select a color or an object area of an object of user's interest of and color correction is conducted using the selected item as a central color of correction to thereby flexibly achieve color correction.

DISCLOSURE OF THE INVENTION

An image color correcting device of the present invention is an image color correcting device for conducting color correction for an input image and supplying an output image to an image display section and comprises a color correction processing section for calculating a central color of an object item or an object color selected by object selecting means for selecting an object item or an object color as a color correction object from the output image of the image display section, setting the central color as a central color of correction, and correcting the central color to thereby correct the output image into a desired color.

Moreover, an image color correcting device of the present invention is an image color correcting device for conducting color correction for an input image and supplying an output image to an image display section and comprises object selecting means for selecting an object item or an object color as a color correction object from the output image of the image display section and a color correction processing section for calculating a central color of the object item or the object color thus selected, setting the central color as a central color of correction, and correcting the central color to thereby correct the output image into a desired color.

Furthermore, an image color correcting device of the present invention is an image color correcting device for conducting color correction for an input image and supplying an output image to an image display section and comprises evaluation image presenting means for presenting a color correction object image, object selecting means for selecting an object item or an object color as a color correction object from an image obtained according to the presentation of the evaluation image presenting means, and a color correction processing section for calculating a central color of the object item or the object color thus selected, setting the central color as a central color of correction, and correcting the central color to thereby correct the output image into a desired color.

Moreover, the image color correcting device of the present invention is characterized in that the image presented by the evaluation image presenting means includes an image of nature including a human face, green of grasses and trees, and a blue sky which are important object items for humans and computer graphics including colors such as red, green, blue, cyan, magenta, and yellow.

Furthermore, the image color correcting device of the present invention is characterized in that the object selecting means includes a computer mouse to designate one pixel of the object item as a color correction object of the output image, a syringe tool capable of designating an area which is variable in area size and contour and which includes at least one pixel and/ or a pen tool to designate a correction area by painting the area.

Moreover, the image color correcting device of the present invention is characterized in that the color correction processing section comprises central color calculating means for calculating a central color of the object selected by the object selecting means and setting the central color as a central color of correction, color adjusting means for adjusting the object color by moving the central color of correction, color correction configuring means for configuring a color correction using a combination of colors before and after the adjustment determined by the color adjusting means, a memory for storing the color correction configured by the color correction configuring means, and image color correcting means for conducting color correction for the input image using the color correction stored in the memory and for outputting a result of the color correction to the image display section.

Furthermore, the image color correcting device of the present invention is characterized in that a method of calculating the central color of correction by the central color calculating means includes setting, when the color of the object item selected by the object selecting means is one pixel, the color of the one pixel as the central color of correction and setting, when the color is designated by a plurality of pixels, an average color of the pixels or a central color thereof as the central color of correction.

Moreover, the image color correcting device of the present invention is characterized in that the color adjusting means comprises a graphic user interface (to be referred to as GUI hereinbelow) for making a color be interactively determined, the color being obtained by adjusting the central color of correction received from the central color calculating means.

Furthermore, the image color correcting device of the present invention is characterized in that the GUI comprises a color adjusting control including a color ring adjusting tool to adjust hue and chroma saturation while viewing a reference image and a lightness adjusting bar to adjust lightness while viewing a reference image, a restoration button to return a color being currently adjusted to a color before the color adjustment, and a determination button to determine the color adjustment.

Moreover, the image color correcting device of the present invention is characterized in that the color correction configuring means configures a color correction using a combination of a central color of the object of the color correction before the color adjustment and a central color thereof after the color adjustment determined by the color adjusting means and records the color correction in the memory.

Furthermore, the image color correcting device of the present invention is characterized in that the image color correcting means inputs an arbitrary input image, conducts a color correction for the input image using the color correction stored in the memory, and presenting a result of the color correction via the image display section.

Moreover, the image color correcting device of the present invention is characterized in that the image display section is a CRT or a liquid-crystal display.

Furthermore, the image color correcting device of the present invention is characterized in that the image display section is an image projecting device such as a projector.

Moreover, the image color correcting device of the present invention is characterized in that when the image display section is an image projecting device such as a projector, the pen tool, the syringe tool, and the color adjusting control are displayed as the GUI in the projected image to conduct color adjustment.

Furthermore, an image color correcting method of the present invention is an image color correcting method of conducting color correction for an input image and supplying an output image to an image display section and comprises the steps of selecting an object item or an object color as a color correction object from the output image of the image display section, calculating a central color of the object item or the object color thus selected and setting the central color as a central color of correction, and correcting the central color to thereby correct the output image into a desired color.

Moreover, an image color correcting method of the present invention is an image color correcting method of conducting color correction for an input image and supplying an output image to an image display section and comprises the steps of presenting a color correction object image, selecting an object item or an object color as a color correction object from an image obtained according to the evaluation image presentation, calculating a central color of the object item or the object color thus selected and setting the central color as a central color of correction, and correcting the central color to thereby correct the output image into a desired color.

Moreover, the image color correcting method of the present invention is characterized in that the object item or the object color is selected using a computer mouse to designate one pixel of the object item as a color correction object of the output image or a syringe tool capable of designating an area which is variable in area size and contour and which includes at least one pixel or a pen tool to designate a correction area by painting the area.

Furthermore, an image color correcting method of the present invention is an image color correcting method of conducting color correction for an input image and supplying an output image to an image display section and comprises an object selecting step of selecting an object item or an object color as a color correction object from the output image of the image display section, a central color calculating step of calculating a central color of the object color and setting the central color as a central color of correction, a color adjusting step of adjusting a color of the object by moving the central color of the correction, a color correction configuring step of configuring a color correction using a combination of colors before and after the adjustment determined in the color adjusting step, a storing step for storing the color correction configured in the color correction configuring step, and an image color correcting step of conducting color correction for the input image using the color correction thus stored and outputting a result of the color correction to the image display section.

Moreover, an image color correcting program of the present invention makes a computer execute color correction processing, the processing comprising calculating a central color of an object item or an object color selected by object selecting means for selecting an object item or an object color as a color correction object from an output image of an image display section and setting the central color as a central color of correction and correcting the central color to thereby correct the output image into a desired color.

BRIEF DESCRIPTION OF DRAWINGS

FIG. 1 is a block diagram showing a configuration of a first embodiment of the present invention.
FIG. 2 is a diagram showing an example of object selecting means in this embodiment.
FIG. 3 is a diagram showing an example of a GUI in this embodiment.
FIG. 4 is a block diagram showing a configuration of a second embodiment of the present invention.
FIG. 5 is a diagram for explaining the case of projection of an image on a colored wall using an image projecting device such as a projector as a third embodiment of the present invention.

In this connection, a numeral 1 denotes an image color correcting device. A numeral 2 denotes an input image. A numeral 3 denotes an image display section. A numeral 4 denotes an image color correcting device. A numeral 10 denotes object selecting means. A numeral 11 denotes a color correction processing section. A numeral 12 denotes evaluation image presenting means. A numeral 31 denotes a wall surface. A numeral 32 denotes a projector. A numeral 33 denotes a projected image. A numeral 101 denotes a syringe tool. A numeral 102 denotes a pen tool. A numeral 111 denotes central color calculating means. A numeral 112 denotes color adjusting means. A numeral 113 denotes color correction configuring means. A numeral 114 denotes a memory. A numeral 115 denotes image color correcting means. A numeral 1121 denotes a GUI. A numeral 1122 denotes a hue ring adjusting tool. A numeral 1123 denotes a lightness adjusting bar. A numeral 1124 denotes a reference image. A numeral 1125 denotes a color adjusting control. A numeral 1126 denotes a restoration button. A numeral 1127 denotes a determination button.

BEST MODE FOR CARRYING OUT THE INVENTION

Referring to drawings, description will be given in detail of an embodiment of the present invention.

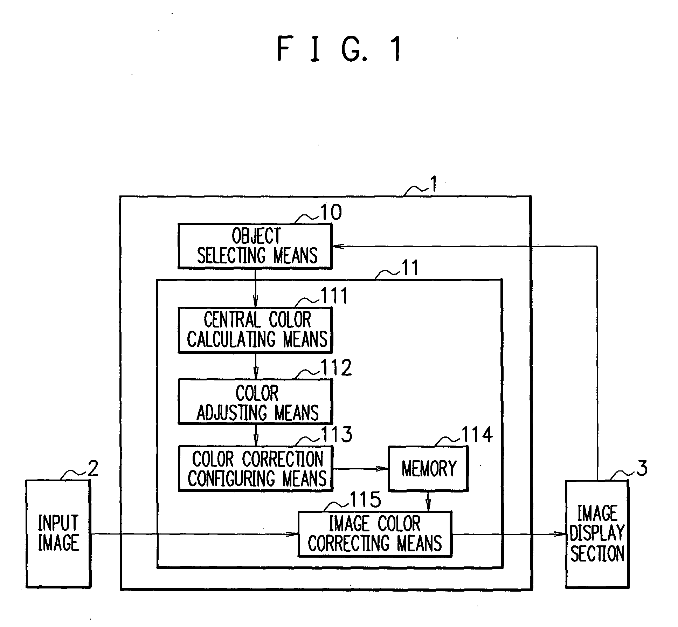

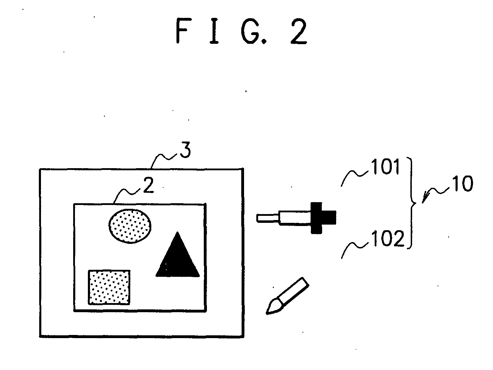

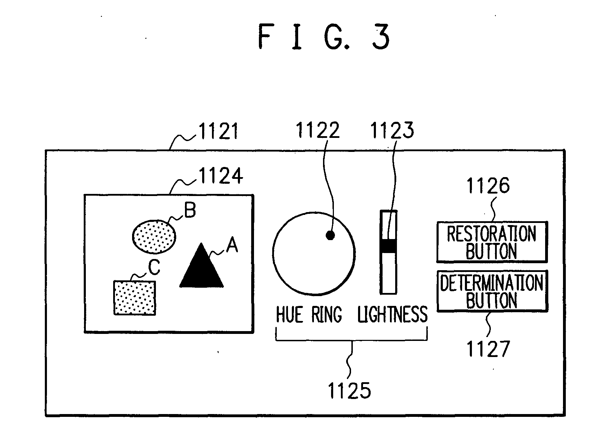

FIG. 1 is a block diagram showing a configuration of a first embodiment of the present invention, FIG. 2 is a diagram showing an example of object selecting means in FIG. 1, and FIG. 3 is a diagram showing a graphic user interface (to be referred to as GUI hereinbelow) in color adjusting means of FIG. 1.

Referring to FIGs. 1 to 3, description will be given of the configuration and function of the first embodiment of the present invention.

In FIG. 1, an image color correcting device 1 conducts color correction for an input image 2 to supply an output image to an image display section 3 and includes object selecting means 10 for selecting an object item or an object color as a color correction object from the output image of the image display section 3 and a color correction processing section 11 which calculates a central color of the selected object item or color to set the central color as a central color of correction and which corrects the central color to thereby correct the output image to a desired color.

As shown in an example of FIG. 2, the object selecting means 10 includes units such as a computer mouse (not shown) to designate one pixel of an object as the color correction object of the output image or a syringe tool 101 capable of designating an area which is variable in area size and contour and which includes at least one pixel and a pen tool 102 to designate a correction area by painting the area.

The color correcting section 11 includes central color calculating means 111 to calculate a central color of the object selected by the object selecting means 10 to set the central color as a correction central color, color adjusting means 112 to adjust the object color by moving the correction central color, color correction configuring means 113 to configure a color correction using a combination of colors before and after the adjustment determined by the color adjusting means 112, a memory 114 to store the color correction configured by the color correction configuring means 113, and image color correcting means 115 to conduct color correction for the input image 2 using the color correction stored in the memory 114 to output a result of the color correction to the image display section 3.

The central color calculating means 111 calculates, when an object of correction is selected by the object selecting means 10, a central color of the object item. When the color of the object item selected by the user is one pixel, a color of the pixel is set as a central color of correction. On the other hand, when the color of the object item is specified by a plurality of pixels, an average color of the pixels or a central color thereof is set as a correction central color.

In addition, the color adjusting means 112 interactively determines a color after the adjustment of the central color using a GUI 1121 shown in FIG. 3. The GUI 1121 includes a reference image 1124 as a color image presented to the user, a color adjusting control 1125 to adjust a color selected by the user, a restoration button 1126 to restore the color being currently adjusted to the color before the color adjustment, and a determination button 1127 to determine the color adjustment. The color adjusting control 1125 includes a hue ring adjusting tool 1122 to adjust hue and chroma saturation and a lightness adjusting bar 1123 to adjust lightness. In this regard, the hue ring adjusting tool 1122 displays a hue ring having brightness at a position of the lightness adjusting bar 1123. While viewing the reference image 1124 on the left, the user adjusts color using the hue ring adjusting tool 1122 or the lightness adjusting bar 1123.

The color correction configuring means 113 of FIG. 1 configures a color correction according to a combination of the central color of the object of color correction before the color adjustment and the central color thereof after the color adjustment determined by the color adjusting means 112. The color correction obtained by the color correction configuring means 113 is recorded in the memory 114.

The image color correcting means 115 inputs an arbitrary input image 2 and conducts color correction for the input image 2 using the color correction stored in the memory 114 to present a result of the color correction via the image display section 3 to the user.

Next, referring to FIGs. 1 to 3, description will be given in detail of an image color correcting method in the color correcting processing section 11.

First, a color image is presented by the image display section 3 to the user. To correct the presented color image into a color preferred by the user, the user selects at least one color from the presented image using the object selecting means 10. For colors to be selected by the user, there exists only a restriction that the selected colors are different from each other, and any other restriction does not exists. That is, colors of natural objects called memory colors of humans such as flesh color, green of grasses and trees, and a blue sky may be selected, and artificial colors not associated with memory colors at all may also be selected.

Assume, for example, that R, G, and B values of a central color of a triangle A selected in FIG. 3 are (R1, G1, B1). The central color calculating means 111 calculates hue, chroma saturation, and lightness of a color (R1, G1, B1) of the selected triangle A currently being presented to the user, and then the hue ring adjusting tool 1122 in the hue ring of the color adjusting control 1125 of the GUI 1121 as the color adjusting means 112 is moved to a position indicating the calculated hue and the calculated chroma saturation and an adjusting control of the lightness adjusting bar 1123 is moved to a position of the calculated lightness.

Thereafter, the user is made to move the hue ring adjusting tool 1122 to adjust the color of the triangle A. The color of the triangle A in the reference image 1124 changes in association with the tool 1122 which the user adjusts. When it is desired to interrupt the current color adjustment to restore the original color, the user depresses the restoration button 1126. To determine the color (R1', G1', B1') of the triangle A after the color adjustment, the user depresses the determination button 1127. Similarly, the user determines (R2', G2', B2') by conducting color adjustment for the color (R2, G2, B2) of a circle B and (R3', G3', B3') by conducting color adjustment for the color (R3, G3, B3) of a rectangle C.

A case in which the color of the object of the color adjustment is not uniform can also be coped with. For example; a case where the color of the triangle A in the reference image 1124 of FIG. 3 is not uniform and gradually changes can be coped with by using a color correcting method described in, for example, Japanese Patent Application laid open No. 10-198795 described above. For a central color designated, color adjustment is normally conducted using the color adjusting control 1125. To a peripheral color of the central color designated for adjustment, selective color correction described in Japanese Patent Application laid open No. 10-198795 is applied so that a result of the color adjustment is reflected in the reference image 1124. In this way, even when the color as an object of color adjustment in the reference image 1124 is not uniform, the color adjustment can be easily conducted while watching the result of color adjustment.

According to a pair of the R, G, and B values before color adjustment designated by the user and the R', G', and B' values after color adjustment, the color correction configuring means 113 configures a color conversion RGB→R'G'B'.

Incidentally, it is assumed that (R, G, B) of a color selected by the user are linear and independent of each other. Expression (1) shows an example of the RGB→R'G'B' conversion.

$$\begin{bmatrix} R' \\ G' \\ B' \end{bmatrix} = \begin{bmatrix} a_{11} & a_{12} & a_{13} \\ a_{21} & a_{22} & a_{23} \\ a_{31} & a_{32} & a_{33} \end{bmatrix} \begin{bmatrix} R \\ G \\ B \end{bmatrix} \qquad (1)$$

In the case of the example of FIG. 3, there is a pair of (Ri, Gi, Bi) before color adjustment and (Ri', Gi', Bi') after color adjustment for three items of the triangle A, the circle B, and the rectangle C. In this case, i = 1 to 3. By substituting R, G, and B values of three items into expression (1), simultaneous linear equations with respect to unknowns $a_{jk}$ (j, k = 1 to 3) are created and are then solved.

$$\begin{bmatrix} a_{11} \\ a_{12} \\ a_{13} \\ a_{21} \\ a_{22} \\ a_{23} \\ a_{31} \\ a_{32} \\ a_{33} \end{bmatrix} = \begin{bmatrix} R_1 & G_1 & B_1 & 0 & 0 & 0 & 0 & 0 & 0 \\ 0 & 0 & 0 & R_1 & G_1 & B_1 & 0 & 0 & 0 \\ 0 & 0 & 0 & 0 & 0 & 0 & R_1 & G_1 & B_1 \\ R_2 & G_2 & B_2 & 0 & 0 & 0 & 0 & 0 & 0 \\ 0 & 0 & 0 & R_2 & G_2 & B_2 & 0 & 0 & 0 \\ 0 & 0 & 0 & 0 & 0 & 0 & R_2 & G_2 & B_2 \\ R_3 & G_3 & B_3 & 0 & 0 & 0 & 0 & 0 & 0 \\ 0 & 0 & 0 & R_3 & G_3 & B_3 & 0 & 0 & 0 \\ 0 & 0 & 0 & 0 & 0 & 0 & R_3 & G_3 & B_3 \end{bmatrix}^{-1} \begin{bmatrix} R_1' \\ G_1' \\ B_1' \\ R_2' \\ G_2' \\ B_2' \\ R_3' \\ G_3' \\ B_3' \end{bmatrix} \qquad (2)$$

By substituting unknowns $a_{jk}$ obtained from expression (2) into the RGB→R'G'B' conversion expression of expression (1), the configuration of color correction reflecting the color adjustment conducted with the color adjusting means 112 by the user can be achieved in the color correction configuring means 113.

In the case of FIG. 3, the user adjusts three colors, however, three or more colors can be adjusted. In the case of three or more colors, equations to obtain the unknowns $a_{jk}$ are created to calculate the unknowns $a_{jk}$ using, for example, a method of least square.

Moreover, the color conversion is not necessarily restricted by expression (1), that is, it is also possible to add an offset term as in expression (3) or a correction term of a higher order as in expression (4).

$$\begin{bmatrix} R' \\ G' \\ B' \end{bmatrix} = \begin{bmatrix} a_{11} & a_{12} & a_{13} \\ a_{21} & a_{22} & a_{23} \\ a_{31} & a_{32} & a_{33} \end{bmatrix} \begin{bmatrix} R \\ G \\ B \end{bmatrix} + \begin{bmatrix} a_{14} \\ a_{24} \\ a_{34} \end{bmatrix} \qquad (3)$$

$$\begin{bmatrix} R' \\ G' \\ B' \end{bmatrix} = \begin{bmatrix} a_{11} & a_{12} & a_{13} & a_{14} & a_{15} & a_{16} & a_{17} \\ a_{21} & a_{12} & a_{13} & a_{14} & a_{15} & a_{16} & a_{17} \\ a_{31} & a_{12} & a_{13} & a_{14} & a_{15} & a_{16} & a_{17} \end{bmatrix} \begin{bmatrix} R \\ G \\ B \\ RG \\ GB \\ RB \\ 1 \end{bmatrix} \qquad (4)$$

When the color conversion of expression (3) or (4) is employed, the minimum number of colors to be adjusted by the user is also increased, and hence the number of colors to be adjusted by the user is also indicated using the GUI 1121. In the case of expression (3), the number of unknowns is 12, the color adjustment is required for at least four linear and independent colors. In the case of expression (4), the number of unknowns is 21, the color adjustment is required for at least seven linear and independent colors.

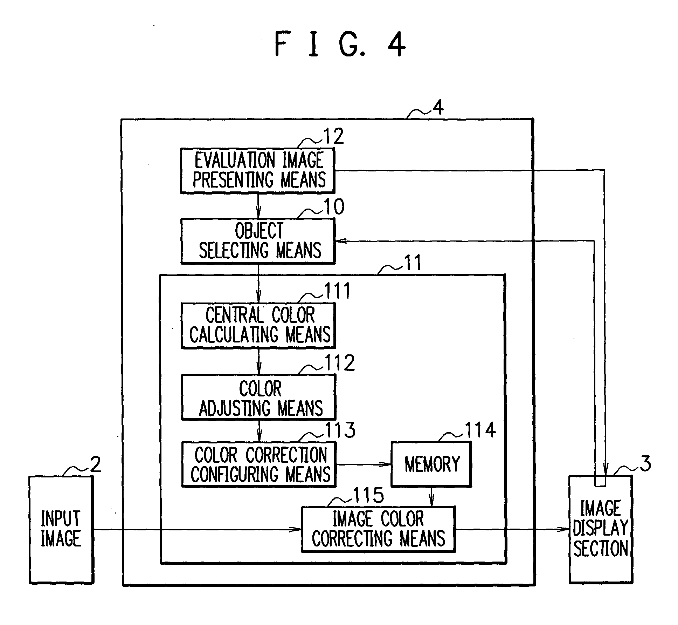

FIG. 4 is a block diagram showing a configuration of a second embodiment of the present invention.

Referring to FIG. 4, an image color correcting device 4 of the second embodiment is of a configuration obtained by adding evaluation image representing means 12 to the image color correcting device 1 of the first embodiment (FIG. 1). In the image color correcting device 1 of the first embodiment, the input image 2 is presented to the user to configure a color correction. However, in the image color correcting device 4 of the second embodiment (FIG. 4), a color correction is configured according to an image presented by the evaluation image representing means 12 to the user.

The image presented by the means 12 is an image prepared by the user in advance and may be, for example, an image of the nature including a human face, green of grasses and trees, and a blue sky which are important object items for us humans and computer graphics including colors such as red, green, blue, cyan, magenta, and yellow.

In the image color correcting device 4, the means and the memory other than the evaluation image presenting means 12 are the same as the means and the memory in the image color correcting device 1 of the first embodiment. Therefore, in the device 4, an output image obtained by applying to the input image 2 the color correction configured according to the image presented by the means 12 to the user is presented via the image display section 3 to the user.

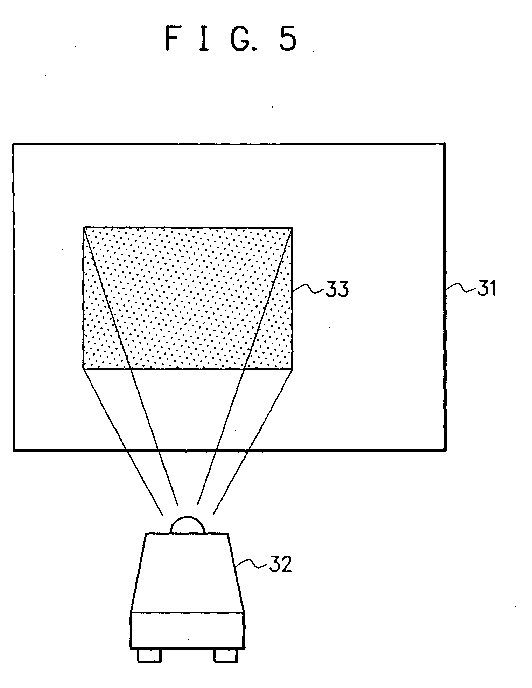

FIG. 5 is a diagram showing a configuration of a third embodiment of the present invention and shows the case where an image projecting device such as a projector is used as the image display section 3 of the first and second embodiments.

The image projecting device such as a projector projects, unlike the image display devices such as a cathode-ray tube (CRT) and a liquid-crystal display, an image onto a wall which is not white depending on cases. In such a case, the displayed color differs from the color obtained when the image is projected onto a white screen. In this situation, by using the image color correcting device 1 of the first embodiment or the image color correcting device 4 of the second embodiment, the displayed image can be converted into a color preferred by the user.

Referring to FIG. 5, an image 33 is projected onto a non-white wall surface 31 by use of a projector 32. Using the image color correcting device 1 or 4, a color correction is conducted for the projected image 33 according to taste of the user to convert the projected image 33 into an image equivalent to an image obtained by projecting the image on a white wall.

For the color correction of the projected image 33, either the color conversion by the display image of the first embodiment or the color conversion using the evaluation image of the second embodiment can be employed.

Additionally, for the color adjustment when an image projecting device such as a projector is used, there exist a case in which the image color correcting device 1 and the image display section 3 (an image projecting device such as a projector) of FIG. 1 conduct the color adjustment and a case in which an image projecting device such as a projector includes the image color correcting device 1 of FIG. 1. In the latter case, a pen tool 102, a syringe tool 101, and a color adjusting control 1125 are displayed as the GUI 1121 in the projected image 33 to conduct the color adjustment.

Incidentally, the function of the color correction processing section 11 in the first to third embodiments can be replaced by a computer program. Moreover, the image display section 3 is a general display and there may be used a CRT, a liquid-crystal display, or a projector described above.

INDUSTRIAL APPLICABILITY

As described above, a first advantage of the present invention is that it is possible to implement flexible color correction capable of coping with taste of each user.

A second advantage is that an object item to be emphasized according to an input image can be flexibly set.

**Claims**

1. An image color correcting device for conducting color correction for an input image and supplying an output image to an image display section, comprising a color correction processing section for calculating a central color of an object item or an object color selected by object selecting means for selecting an object item or an object color as a color correction object from the output image of the image display section, setting the central color as a central color of correction, and correcting the central color to thereby correct the output image into a desired color.

2. An image color correcting device for conducting color correction for an input image and supplying an output image to an image display section, comprising object selecting means for selecting an object item or an object color as a color correction object from the output image of the image display section and a color correction processing section for calculating a central color of the object item or the object color thus selected, setting the central color as a central color of correction, and correcting the central color to thereby correct the output image into a desired color.

3. An image color correcting device for conducting color correction for an input image and supplying an output image to an image display section, comprising evaluation image presenting means for presenting a color correction object image, object selecting means for selecting an object item or an object color as a color correction object from an image obtained according to the presentation of the evaluation image presenting means, and a color correction processing section for calculating a central color of the object item or the object color thus selected, setting the central color as a central color of correction, and correcting the central color to thereby correct the output image into a desired color.

4. The image color correcting device in accordance with claim 3, wherein the image presented by the evaluation image presenting means includes an image of nature including a human face, green of grasses and trees, and a blue sky which are important object items for humans and computer graphics including colors such as red, green, blue, cyan, magenta, and yellow.

5. The image color correcting device in accordance with claim 2 or 3, wherein the object selecting means includes a computer mouse to designate one pixel of the object item as a color correction object of the output image, a syringe tool capable of designating an area which is variable in area size and contour and which includes at least one pixel and/ or a pen tool to designate a correction area by painting the area.

6. The image color correcting device in accordance with claim 2 or 3, wherein the color correction processing section comprises central color calculating means for calculating a central color of the object selected by the object selecting means and setting the central color as a central color of correction, color adjusting means for adjusting the object color by moving the central color of correction, color correction configuring means for configuring a color correction using a combination of colors before and after the adjustment determined by the color adjusting means, a memory for storing the color correction configured by the color correction configuring means, and image color correcting means for conducting color correction for the input image using the color correction stored in the memory and for outputting a result of the color correction to the image display section.

7. The image color correcting device in accordance with claim 6, wherein a method of calculating the central color of correction by the central color calculating means includes setting, when the color of the object item selected by the object selecting means is one pixel, the color of the one pixel as the central color of correction and setting, when the color is designated by a plurality of pixels, an average color of the pixels or a central color thereof as the central color of correction.

8. The image color correcting device in accordance with claim 6, wherein the color adjusting means includes a graphic user interface (to be referred to as GUI hereinbelow) for making a color be interactively determined, the color being obtained by adjusting the central color of correction received from the central color calculating means.

9. The image color correcting device in accordance with claim 6, wherein the GUI comprises a color adjusting control including a color ring adjusting tool to adjust hue and chroma saturation while viewing a reference image and a lightness adjusting bar to adjust lightness while viewing a reference image, a restoration button to return a color being currently adjusted to a color before the color adjustment, and a determination button to determine the color adjustment.

10. The image color correcting device in accordance with claim 6, wherein the color correction configuring means configures a color correction using a combination of a central color of the object of the color correction before the color adjustment and a central color thereof after the color adjustment determined by the color adjusting means and records the color correction in the memory.

11. The image color correcting device in accordance with claim 6, wherein the image color correcting means inputs an arbitrary input image, conducts a color correction for the input image using the color correction stored in the memory, and presenting a result of the color correction via the image display section.

12. The image color correcting device in accordance with claim 2 or 3, wherein the image display section is a CRT or a liquid-crystal display.

13. The image color correcting device in accordance with claim 2 or 3, wherein the image display section is an image projecting device such as a projector.

14. The image color correcting device in accordance with claim 13, wherein when the image display section is an image projecting device such as a projector, the pen tool, the syringe tool, and the color adjusting control are displayed as the GUI in the projected image to conduct color adjustment.

15. An image color correcting method of conducting color correction for an input image and supplying an output image to an image display section, comprising the steps of selecting an object item or an object color as a color correction object from the output image of the image display section, calculating a central color of the object item or the object color thus selected and setting the central color as a central color of correction, and correcting the central color to thereby correct the output image into a desired color.

16. An image color correcting method of conducting color correction for an input image and supplying an output image to an image display section, comprising the steps of presenting a color correction object image, selecting an object item or an object color as a color correction object from an image obtained according to the evaluation image presentation, calculating a central color of the object item or the object color thus selected and setting the central color as a central color of correction, and correcting the central color to thereby correct the output image into a desired color.

17. The image color correcting method in accordance with claim 15 or 16, wherein the object item or the object color is selected using a computer mouse to designate one pixel of the object item as a color correction object of the output image or a syringe tool capable of designating an area which is variable in area size and contour and which includes at least one pixel or a pen tool to designate a correction area by painting the area.

18. An image color correcting method of conducting color correction for an input image and supplying an output image to an image display section, comprising an object selecting step of selecting an object item or an object color as a color correction object from the output image of the image display section, a central color calculating step of calculating a central color of the object color and setting the central color as a central color of correction, a color adjusting step of adjusting a color of the object by moving the central color of the correction, a color correction configuring step of configuring a color correction using a combination of colors before and after the adjustment determined in the color adjusting step, a storing step for storing the color correction configured in the color correction configuring step, and an image color correcting step of conducting color correction for the input image using the color correction thus stored and outputting a result of the color correction to the image display section.

**19.** An image color correcting program, making a computer execute color correction processing, the processing comprising calculating a central color of an object item or an object color selected by object selecting means for selecting an object item or an object color as a color correction object from an output image of an image display section and setting the central color as a central color of correction and correcting the central color to thereby correct the output image into a desired color.

# F I G. 1

# F I G. 2

# F I G. 3

1121  1122  1123  1124  1126  RESTORATION BUTTON  DETERMINATION BUTTON  1127  B  A  C  HUE RING  LIGHTNESS  1125

# F I G. 4

# F I G. 5

~33

~31

~32

# EP 1 544 789 A1

**INTERNATIONAL SEARCH REPORT**

International application No.

PCT/JP03/11986

| A. CLASSIFICATION OF SUBJECT MATTER |
|---|
| Int.Cl$^7$  G06T1/00, G06T11/60, H04N1/60, G09G5/02, G06F3/00 |

According to International Patent Classification (IPC) or to both national classification and IPC

| B. FIELDS SEARCHED |
|---|
| Minimum documentation searched (classification system followed by classification symbols) |
| Int.Cl$^7$  G06T1/00, G06T11/60, H04N1/60, G09G5/02, G06F3/00 |

Documentation searched other than minimum documentation to the extent that such documents are included in the fields searched

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 5-119752 A  (Fujitsu Ltd.),<br>18 May, 1993 (18.05.93),<br>Full text; all drawings<br>(Family: none) | 1-19 |
| Y | JP 2-194479 A  (Omron Corp.),<br>01 August, 1990 (01.08.90),<br>Full text; all drawings<br>(Family: none) | 1-19 |
| A | JP 6-121159 A  (Fujitsu Ltd.),<br>28 April, 1994 (28.04.94),<br>Full text; all drawings<br>(Family: none) | 4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 November, 2003 (21.11.03) | 09 December, 2003 (09.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

16

**EP 1 544 789 A1**

## INTERNATIONAL SEARCH REPORT

International application No.

PCT/JP03/11986

| C (Continuation). DOCUMENTS CONSIDERED TO BE RELEVANT |||
|---|---|---|
| Category* | Citation of document, with indication, where appropriate, of the relevant passages | Relevant to claim No. |
| A | JP 5-210719 A (Xerox Corp.), 20 August, 1993 (20.08.93), Full text; all drawings & EP 536893 A2 & EP 536893 A3 & US 5270806 A | 9 |
| A | JP 3-127284 A (Brother Industries, Ltd.), 30 May, 1991 (30.05.91), Full text; all drawings (Family: none) | 1-19 |
| A | JP 4-156779 A (Matsushita Electric Industrial Co., Ltd.), 29 May, 1992 (29.05.92), Full text; all drawings & EP 481525 B1 | 1-19 |
| A | JP 2002-135559 A (Noritsu Koki Co., Ltd.), 10 May, 2002 (10.05.02), Full text; all drawings (Family: none) | 1-19 |

Form PCT/ISA/210 (continuation of second sheet) (July 1998)

17